# EUROPÄISCHE PATENTSCHRIFT

(11) **EP 1 173 869 B1**
(45) Veröffentlichungstag und Bekanntmachung des Hinweises auf die Patenterteilung: **16.07.2003**
(21) Anmeldenummer: 00920650.9
(22) Anmeldetag: 01.04.2000
(51) Int. Cl.: H01H 83/12, H02H 3/253

(54) **UNTERSPANNUNGSAUSLÖSER**
UNDERVOLTAGE RELEASE
DISJONCTEUR A MINIMUM DE TENSION

(30) Priorität: 28.04.1999 DE 19919331
(43) Veröffentlichungstag der Anmeldung: 23.01.2002
(73) Patentinhaber: Ellenberger & Poensgen GmbH, D-90518 Altdorf (DE)
(72) Erfinder: MECKLER, Peter, D-91224 Pommelsbrunn / Hohenstadt (DE)
(74) Vertreter: Tergau, Enno, Dipl.-Ing.
(86) Internationale Anmeldenummer: EP0002930
(87) Internationale Veröffentlichungsnummer: WO00067279

(56) Entgegenhaltungen:
- FR-A- 956 492
- US-A- 3 242 383
- US-A- 4 021 703
- US-A- 4 027 204
- US-A- 5 777 835
- US-A- 5 834 996

## Beschreibung

Die Erfindung betrifft einen Unterspannungsauslöser als Anbaumodul für ein mehrpoliges Niederspannungsschaltgerät gemäß dem Oberbegriff des Ansprüchs 1. Ein entsprechender Überwachungskreis zür Detektion von Phasenfahlern in einem mehrpoligen Schaltgerät ist aus der US 3,242, 383 bekannt. Unter Niederspannungsschaltgerät wird hierbei insbesondere ein Leistungsschalter, z. B. ein Überstromschutzschalter verstanden.

Aus der EP 0 802 552 A2 ist darüber hinaus ein derartiger elektrischer Schalter mit einer elektromagnetischen Unterspannungsauslösung bekannt, die als Magnetkreis mit einer Magnet- oder Auslösespule und mit einem beweglichen Magnetanker ausgeführt ist. Der bewegliche Magnetanker ist mit einem Schaltorgan des elektrischen Schalters derart mechanisch gekoppelt, dass dieses bei Absinken einer überwachten Netzspannung des zu schützenden Leitungsnetzes unter einen bestimmten Spannungsgrenzwert infolge eines Öffnen des Magnetkreises ausgelöst und in seine Ausschaltstellung überführt wird. Ein erneutes Schließen des Schaltorgans ist bei an den elektrischen Schalter angekoppelter Unterspannungsauslösung nur dann möglich, wenn einerseits der Magnetkreis wieder geschlossen ist, und wenn andererseits die überwachte Netzspannung den Spannungsgrenzwert übersteigt.

Dieser Unterspannungsauslöser wird üblicherweise bei einem ein- oder zweipoligen Schaltgerät eingesetzt und vom zu überwachenden Leitungsnetz ein- bzw. zweiphasig gespeist. Eine derartige ein- oder zweiphasige Speisung des Unterspannungsauslösers hat jedoch den Nachteil, dass bei Überwachung eines mehrphasigen Leitungsnetzes mit einem drei- oder vierpoligen Schaltgerät eine schon aus Sicherheitsgründen erforderliche Unterspannungsauslösung zumindest dann nicht zuverlässig erfolgt, wenn eine nicht zur Spannungsversorgung des Unterspannungsauslösers verwendete Phase ausfällt.

Der Erfindung liegt daher die Aufgabe zugrunde, einen Unterspannungsauslöser für ein mehrpoliges Schaltgerät, insbesondere für einen drei- oder vierpoligen Überstromschutzschalter, anzugeben,der dreipoligen, Schutz bieten und als kostengünstiges Anbauteil in möglichst einfacher Art und Weise modular aufbaubar sein soll.

Diese Aufgabe wird erfindungsgemäß gelöst durch die Merkmale des Anspruchs 1. Die Auslösevorrichtung bewirkt dabei bereits bei Ausfallen nur einer einzigen Phase eine allpolige Auslösung des Schaltgerätes.

Die Erfindung geht dabei von der Überlegung aus, dass bei Einsatz einer dreipulsigen Gleichrichter-Brückenschaltung bei Ausfall bereits einer einzelnen Phase auf der wechselstromseitigen Versorgungsseite gleichstromseitig der Effektivwert des Stromes entsprechend der entstehenden Lückung in der Gleichspannung absinkt. Wird die auf der Gleichstromseite der drei pulsigen Brückenschaltung entstehende Gleichspannung als Versorgungsspannung für die elektromagnetische Auslösevorrichtung des Unterspannungsauslösers herangezogen, so sinkt aufgrund einer Verstimmung der Gleichrichterzweige innerhalb der Brückenschaltung infolge des Phasen-Ausfalls auch der Effektivwert der Versorgungsspannung. Die zur Speisung der elektromagnetischen Auslösevorrichtung des Unterspannungsausfösers verwendete Gleichspannung der mehrpoligen oder mehrphasigen Gleichrichter-Brückenschaltung bildet somit den Ausfall jeder einzelnen Phase des zu überwachenden Leitungsnetzes unmittelbar ab und kann daher als zuverlässiges Auslösekriterium herangezogen werden.

In prinzipeller Ausführung dient die von der Gleichrichter-Brücke erzeugte Gleichspannung als Haltespannung für einen in einem Magnetkreis oder Magnetsystem liegenden Anker, auf den eine Rückstellkraft wirkt, die einer durch die Haltespannung erzeugten Haltekraft entgegengerichtet ist. Sinkt der Effektivwert der Haltespannung infolge einer Verstimmung der Gleichrichter-Brücke ab, so unterschreitet der Betrag der Haltekraft den Betrag der Rückstellkraft mit der Folge, dass der Anker abfällt und somit die gewünschte Auslösung erfolgt. Dieses Funktionsprinzip wird in besonders vorteilhafter Ausgestaltung dadurch Malisiert, dass die Auslösevorrichtung ein z. B. U-förmiges Joch mit einem Spulenkörper aufweist, der einzelne Wicklungsteile der Auslösespule trägt. Der Spulenkörper ist zweckmäßigerweise in eine der Anzahl der Wicklungsteile entsprechende Anzahl von nebeneinander liegenden Kammern unterteilt. Auch könne die Wicklungsteile in einem einen ungeteilten, d. h. nicht unterteilten Spulenkörper tragenden Joch übereinander gewickelt und durch Isolierfolien voneinander getrennt angeordnet sein.

Die Anzahl der Wicklungsteile entspricht dabei der Anzahl der Gleichrichterzweige, in denen die einzelnen Wicklungsteile in Reihenschaltung mit jeweils einer Gleichrichter-Diode liegen. Die elektromagnetische Auslösevorrichtung ist somit vorteilhafterweise ein mit einem entsprechenden Spulenkörper ausgeführtes Auslöserelais, das ebenfalls in geringer Baugröße ausführbar ist. Die derart ausgebildete Auslösevorrichtung kann dann vorzugsweise zusammen mit der Gleichrichter-Brückenschaltung in ein Gehäuse integriert sein, dass als Anbaumodul für das Schaltgerät einsetzbar ist.

Der für die elektromagnetische Auslösevorrichtung, insbesondere für deren Auslösespule, erforderliche Vorwiderstand kann durch einen einzelnen, der Auslösevorrichtung vorgeschalteten ohm'schen Widerstand oder durch eine der Anzahl der Gleichrichterzweige entsprechende Anzahl von Teilwiderständen realisiert sein. Die Aufspaltung des Vorwiderstandes, d. h. des entsprechenden Vorwiderstandswertes für die Auslösevorrichtung, auf die einzelnen Phasen innerhalb der Gleichrichterzweige erfolgt dabei zweckmäßigerweise zu gleichen Teilen.

Die mit der Erfindung erzielten Vorteile bestehen insbesondere darin, dass durch die Speisung einer elektromagnetischen Auslösevorrichtung über eine drei polige Gleichrichter-Brückenschaltung ein mehrphasiger Unterspannungsauslöser bereitgestellt ist, der bei Ausfall einer beliebigen Phase des zu überwachenden Leitungsnetzes eine allpolige Auslösung des angekoppelten Schaltgerätes bewirkt. Der derart aufgebaute Unterspannungsauslöser eignet sich besonders als Anbaumodul für einen drei- oder vierpoligen Überstromschutzschalter.

Der Unterspannungsauslöser bietet somit in Verbindung mit einem entsprechenden Schaltgerät oder Leistungsschalter einen zuverlässigen allpoligen Schutz eines an das entsprechende Leitungsnetz angeschlossenen Verbrauchers unabhängig davon, welche und wieviele Phasen des Leitungsnetzes ausfallen.

Nachfolgend werden Ausführungsbeispiele der Erfindung anhand einer Zeichnung näher erläutert. Darin zeigen:
- Fig. 1: schematisch einen mit einem Leitungsschutzschalter kombinierten Unterspannungsauslöser mit einer gleichstromgespeisten Auslösevorrichtung,
- Fig. 2: in einem Blockschaltbild eine dreipulsige Brückenschaltung mit auf die Gleichrichterzweige aufgeteilten Wicklungen und Vorwiderständen der bzw. für die Auslösespule der Auslösevorrichtung,
- Fig. 3: ein System gemäß Fig. 2 mit einem einzelnen Vorwiderstand, und
- Fig. 4: in einer Schnittdarstellung einen Magnetkreis mit einem Anker und mit einem einen dreiteiligen Spulenkörper tragenden Joch.

Einander entsprechende Teile sind in allen Figuren mit den gleichen Bezugszeichen versehen.

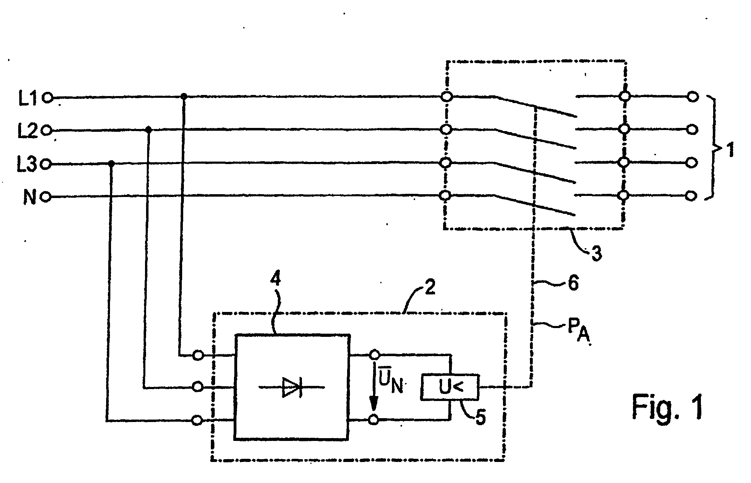

Um bei Unterschreiten einer Unterspannung in einem dreiphasigen Stromnetz L1 bis L3 mit im Ausführungsbeispiel zusätzlichem Nullleiter N einen daran angeschlossenen Verbraucherstromkreis 1 vom Strom- oder Leitungsnetz L1 bis L3 zu trennen, ist gemäß Fig. 1 ein Unterspannungsauslöser 2 in Kombination mit einem Leitungsschutzschalter 3 eingesetzt. Der Leitungsschutzschalter 3 ist beispielsweise ein vierpoliger Überstromschutzschalter, der zwischen das Leitungsnetz L1 bis L3 und den Verbraucherstromkreis 1 geschaltet ist. Der Schutzschalter 3 trennt im Bedarfsfall alle Leiter des Leitungsnetzes L1 bis L3 von den entsprechenden Leitern des Verbraucherstromkreises 1 ab.

Der Unterspannungsauslöser 2 umfasst einen wechselstromseitig an die drei Phasen L1 bis L3 angeschlossenen mehrpoligen Gleichrichter 4, der wechselstromseitig an alle drei Phasen L1 bis L3 angeschlossen ist und den Wechselstrom der einzelnen Phasen L1 bis L3 gleichrichtet. Der Gleichrichter 4 erzeugt gleichstromseitig eine Gleichspannung U_{N}, die ausgangsseitig am Gleichrichter 4 abgreifbar ist. Diese gleichgerichtete Netzspannung U_{N} dient zur Versorgung einer elektromagnetischen Auslösevorrichtung 5 des Unterspannungsauslösers 2. Die Auslösevorrichtung 5 ist über ein mechanisches Kraftübertragungssystem 6 z. B. an ein Schaltschloss des Schutzschalters 3 gekoppelt.

Die Auslösevorrichtung 5 bewirkt über das mechanische Kraftübertragungssystem 6 ein Öffnen des Schutzschalters oder Schaltgerätes 3, wenn die gleichgerichtete Netz- oder Versorgungsspannung U_{N} eine bestimmte, vorgebbare Grenzspannung U unterschreitet. Die Auslösung des Schutzschalters 3 erfolgt dabei allpolig, d. h. alle drei Phasen L1 bis L3 sowie der Nulleiter N werden infolge der Unterspannungsauslösung geöffnet. Ein erneutes Schließen des Schutzschalters 3 ist nur dann möglich, wenn die gleichgerichtete Netzspannung U_{N} die Grenzspannung U übersteigt, d. h. wenn das Kriterium U_{N} > U erfüllt ist. Ist U_{N} < U, so ist ein Schließen des Schutzschalters 3 nicht möglich. Die Grenzspannung ergibt sich z. B. nach DIN EN 60934 zu 0,8 U_{N}.

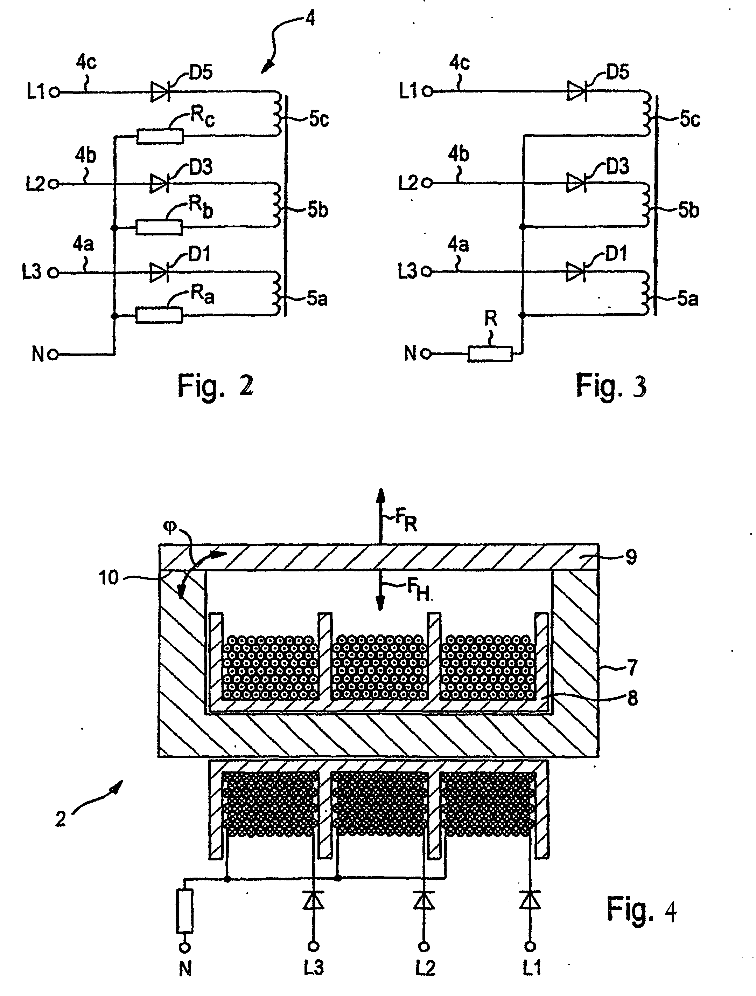

Die Figuren 2 und 3 zeigen eine besonders bevorzugte Ausführungsform einer dreipulsigen Brückenschalterschaltung als Gleichrichter-Brücke 4. Bei dieser Ausführungsform wird ein Magnetsystem vom dreiphasigen Gleichrichter 4 mit in jedem Gleichrichterzweig 4a bis 4c einer Teilwicklung oder einem Wicklungsteil 5a bis 5c gespeist. In jedem Gleichrichterzweig 4a bis 4c ist dem entsprechenden Wicklungsteil 5a,5b,5c wiederum eine Diode D1, D3 bzw. D5 vorgeschaltet. Bei der Ausführungsform gemäß Fig. 2 ist nur ein den Wicklungsteilen 5a bis 5c nachgeschalteter und diesen gemeinsamer Vorwiderstand R vorgesehen. Dagegen sind bei der Ausführungsform gemäß Fig. 3 Teil-Vorwiderstände Rₐ bis R_{c} in jeder Phase L1 bis L3 dem entsprechenden Wicklungsteil 5a,5b bzw. 5c nachgeschaltet. Dazu sind die Teil-Vorwiderstände Rₐ bis R_{c} zumindest annähernd gleichmäßig auf die drei Phasen L1 bis L3 verteilt, wobei die Wicklungsteile 5a bis 5c innerhalb der einzelnen Gleichrichterzweige 4a bis 4c der jeweiligen Diode D1, D3 bzw. D5 kathodenseitig nachgeschaltet sind. Ebenso wie der einzelne Vorwiderstand R sind auch die Vorwiderstände R bzw. Rₐ,R_{c} an den Nullleiter N geführt, während die Dioden D1, D3 und D5 anodenseitig wiederum an die jeweilige Phase L1 bis L3 angeschlossen werden. Auch ist eine umgekehrte Anordnung der Dioden D1,D3,D5 innerhalb der Gleichrichterzweige 4a bis 4c möglich.

Eine besonders zweckmäßige prinzipielle Realisierung eines ein solches Magnetsystems als elektromagnetische Auslösevorrichtung 5 und eine solche Gleichrichter-Brücke 4 aufweisenden Unterspannungsauslösers 2 zeigt Fig. 4. Dazu ist an einem U-förmigen Joch 7 ein in drei Kammern 8a bis 8c unterteilter Spulenkörper 8 angebracht. Die in diesen Kammern 8a,8b,8c nebeneinander liegenden und somit getrennt voneinander angeordneten drei Wicklungsteile 5a,5b bzw. 5c sind durch eine Verschaltung gemäß Fig. 3 auf die drei Phasen L1 bis L3 aufgeteilt. Der Vorwiderstand R ist wiederum an den Nullleiter N geführt. Hier ist jedoch auch eine Aufteilung des Vorwiderstands in die Teilwiderstände Rₐ bis R_{c} gemäß Fig. 2 möglich. Dem Joch 7 ist ein beweglicher Anker 9 zugeordnet, so dass in der dargestellten Anordnung der Magnetkreis über das Joch 7 und den Anker 9 geschlossen ist.

Das Joch 7 und der Anker 9 bestehen aus einem ferromagnetischen Material, während die Wicklungsteile 5a bis 5c der Auslösevorrichtung 5 aus Kupfer oder aus einem anderen elektrisch leitfähigen Material bestehen. Der Spulenkörper 8 besteht aus einem Isolierstoff. Dieser kann auch ungeteilt sein, wobei dann die Wicklungsteile 5a bis 5c z. B. in einem einen nicht unterteilten Spulenkörper tragenden Joch 7 übereinander gewikkelt und durch Isolierfolien voneinander getrennt angeordnet sind.

Bei allen Ausführungsformen gemäß den Figuren 2 bis 4 ist das Funktionsprinzip des Unterspannungsauslösers 2 gleich. Danach sinkt bei Ausfall einer Phase L1, L2 oder L3 der Effektivwert des Stromes I auf der Gleichstromseite der jeweiligen Gleichstrom-Brücke 4 entsprechend der entstehenden Lückung in der Gleichspannung U_{N} ab. Grund hierfür ist, dass bei Ausfall der oder jeder entsprechenden Phase L1, L2 und/oder L3 in dem jeweiligen Gleichrichterzweig 4a, 4b, 4c kein Strom fließt, so dass die Gleichrichter-Brücke 4 auf der Gleichstromseite mit der Folge verstimmt wird, dass der resultierende Gleichstrom I, der die elektromagnetische Auslösevorrichtung 5 durchströmt, abnimmt Demzufolge nimmt auch die gleichgerichtete Netz- oder Versorgungsspannung U_{N} ab, die ihrerseits die Haltekraft der elektromagnetischen Auslösevorrichtung 5 bestimmt. Die Haltekraft einerseits und eine dieser entgegengerichteten Rückstellkraft der elektromagnetischen Auslösevorrichtung 5 sind nun derart aufeinander abgestimmt, dass die Rückstellkraft die abgesunkene Haltekraft übersteigt. Dies ist in Fig.4 anhand eines die Haltekraft F_{H} und eines die Rückstellkraft F_{R} repräsentierenden Pfeils am Anker 9 des Magnetkreises 5a bis 5c, 7, 9 veranschaulicht.

Dabei wird durch die Gleichrichtung mittels der Gleichrichter-Brücke 4 ein magnetisches Gleichfeld mit der Folge eines magnetischen Flusses ϕ über den Spulenkern bzw. das Joch 7 und den Anker 9 erzeugt. Der magnetische Fluss ϕ erzeugt in den Luftspalten 10 zwischen dem Spulenkern bzw. dem Joch 7 und dem Anker 9 die Haltekraft F_{H}, die den Anker 9 an den Spulenkern bzw. das Joch 7 zieht. Fällt eine Phase L1, L2 oder L3 aus, so verringert sich diese Haltekraft F_{H} um einen der Verstimmung der Gleichrichter-Brücke 4 entsprechenden Betrag, mit der Folge, dass der Anker 9 infolge der nunmehr vergleichsweise großen Rückstellkraft F_{R} vom Spulenkern bzw. Joch 7 abgehoben wird.

Die Differenz zwischen diesen Kräften F_{H} und F_{R} bei dreiphasigem und zweiphasigem Stromfluss ist bei den Ausführungsformen gemäß den Figuren 2 bis 4 besonders groß. Diese Ausführungsformen sind daher besonders geeignet, um Fertigungstoleranzen der elektromagnetischen Auslösevorrichtung 5 auszugleichen.

Aufgrund der Kopplung der elektromagnetischen Auslösevorrichtung 5 über das Kraftübertragungssystem 6 wird bei Überwindung der Haltekraft F_{H} durch die Rückstellkraft F_{R} ein entsprechender mechanischer Impuls P_{A} auf den üblicherweise in Form eines Schaltschlosses ausgeführten Auslösemechanismus des Schaltgerätes 3 bewirkt, infolgedessen eine allpolige Abschaltung des Verbraucherstromkreises 1 vom Leitungsnetz L1 bis L3, N erfolgt.

Der Unterspannungsauslöser 2 ist dabei zweckmäßigerweise als Anbaumodul ausgeführt, indem die Gleichrichter-Brücke 4 und die elektromagnetische Auslösevorrichtung 5 in ein gemeinsames Gehäuse integriert sind. Der derart modulare Unterspannungsaustöser 2 kann somit für verschiedenartige Niederspannungsschaltgeräte eingesetzt werden. Besonders geeignet ist ein derartig aufgebauter Unterspannungsauslöser 2 für einen drei- bzw. vierpoligen Überstromschutzschalter.

### Bezugszeichenliste

- 2: Unterspannungsauslöser
- 3: Schaltgerät
- 4: Gleichrichter/-Brücke
- 4a,b,c: Gleichrichterzweig
- 5: Auslösevorrichtung
- 5a,b,c: Wicklungsteil
- 6: Kraftübertragungssystem
- 7: Joch
- 8: Spulenkörper
- 8a,b,c: Kammer
- 9: Anker
- 10: Luftspalt

- D: Diode
- F_{H}: Haltekraft
- F_{R}: Rückstellkraft
- I: Gleichstrom
- L: Phase
- N: Nullleiter
- R: Vorwiderstand
- U_{N}: gleichgerichtete Netzspannung

## Patentansprüche

1. Unterspannungsausföser als Anbaumodul für ein mehrpoliges Niederspannungsschaltgerät (3), mit einer elektromagnetischen Auslösevorrichtung (5), die bei Unterschreiten eines vorgebbaren Spannungsgrenzwertes (U) eine Auslösung des Niederspannungsschaltgerätes (3) bewirkt, und mit
einer von einem mehrphasigen Leitungsnetz (1) gespeisten Gleichrichter-Brücke (4) mit einer der Anzahl der Phasen (L1,L2,L3) entsprechenden Anzahl von die Auslösevorrichtung (5) gemeinsam speisenden Gleichrichterzweigen (4a,4b,4c), wobei die Auslösevorrichtung (5) bei Ausfall einer Phase (L1,L2,L3) eine allpolige Auslösung des Niederspannungsschaltgerätes (3) bewirkt,
**dadurch gekennzeichnet,**
**dass** die Gleichrichter-Brücke (4) als dreipulsige Brückenschaltung ausgeführt ist, und
**dass** die Auslösevorrichtung (5) einen Magnetkreis und mit einem federbelasteten Anker (9) mit einer Auslösespule (5a,5b,5c) aufweist, die eine der Anzahl der Phasen (L1,L2,L3) entsprechende Anzahl von Wicklungsteilen (5a,5b,5c) aufweist, von denen jeder in einem der Gleichrichterzweige (4a,4b,4c) liegt, wobei infolge des Ausfalls mindestens einer Phase (L1,L2,L3) eine auf den Anker (9) wirkende Rückstellkraft (F_{R}) die vom Magnetkreis erzeugte Haltekraft (F_{H}) übersteigt.

2. Unterspannungsauslöser nach Anspruch 1,
**dadurch gekennzeichnet,**
**dass** in jedem Gleichrichterzweig (4a,4b,4c) mindestens eine Diode (D1, D3, D5) und ein dieser kathodenseitig nachgeschalteter ohm'scher Widerstand (Rₐ,R_{b},R_{c}) liegt, wobei deren aufsummierte Widerstandswerte dem Vorwiderstandswert der Auslösevorrichtung (5) entsprechen.

3. Unterspannungsauslöser nach Anspruch 1,
**dadurch gekennzeichnet,**
**dass** in jedem Gleichrichterzweig (4a,4b,4c) mindestens eine mit einem Vorwiderstand (R) der Auslösevorrichtung (5) verbundene Diode (D1, D3, D5) liegt.

4. Unterspannungsauslöser nach einem der Ansprüche 1 bis 3,
**dadurch gekennzeichnet,**
**dass** die Wicklungsteile (5a,5b,5c) in einem einen Spulenkörper (8) tragenden Joch (7) angeordnet sind.

5. Unterspannungsauslöser nach Anspruch 4,
**dadurch gekennzeichnet,**
**dass** der Spulenkörper (8) in eine der Anzahl der Wicklungsteile (5a,5b,5c) entsprechende Anzahl von Kammern (8a,8b,8c) unterteilt ist.

## Claims

1. Undervoltage release as an attachment module for a multipole low-voltage switching device (3), having an electromagnetic tripping apparatus (5) which causes the low-voltage switching device (3) to trip when a voltage limit value (U) which can be predetermined is undershot, and having a rectifier bridge (4), which is fed from a polyphase line network (1) and has a number, corresponding to the number of phases (L1, L2, L3), of rectifier arms (4a, 4b, 4c) which feed the tripping apparatus (5) jointly, with the tripping apparatus (5) tripping all the poles of the low-voltage switching device (3) in the event of failure of one phase (L1, L2, L3),
**characterized**
**in that** the rectifier bridge (4) is in the form of a three-pulse bridge circuit, and
**in that** the tripping apparatus (5) has a magnetic circuit with a spring-loaded armature (9) and with a tripping coil (5a, 5b, 5c) which has a number, corresponding to the number of phases (L1, L2, L3), of winding parts (5a, 5b, 5c), each of which is located in one of the rectifier arms (4a, 4b, 4c), with a resetting force (F_{R}), which acts on the armature (9), exceeding the holding force (F_{H}) which is produced by the magnetic circuit as a consequence of the failure of at least one phase (L1, L2, L3).

2. Undervoltage release according to Claim 1,
**characterized**
**in that** at least one diode (D1, D3, D5) and one non-reactive resistor (Rₐ, R_{b}, R_{c}), which follows the respective diode on the cathode side, are located in each rectifier arm (4a, 4b, 4c), with the sum of their resistance values corresponding to the series resistance value of the tripping apparatus (5).

3. Undervoltage release according to Claim 1,
**characterized**
**in that** at least one diode (D1, D3, D5), which is connected to a series resistor (R) of the tripping apparatus (5), is located in each rectifier arm (4a, 4b, 4c).

4. Undervoltage release according to one of Claims 1 to 3,
**characterized**
**in that** the winding parts (5a, 5b, 5c) are arranged in a yoke (7) to which a coil former (8) is fitted.

5. Undervoltage release according to Claim 4,
**characterized**
**in that** the coil former (8) is subdivided into a number of chambers (8a, 8b, 8c) corresponding to the number of winding parts (5a, 5b, 5c).

## Revendications

1. Disjoncteur à minimum de tension en tant que module rapporté pour un appareil multipolaire (3) de commutation à basse tension, comportant un dispositif de déclenchement électromagnétique (5), qui lorsque la tension tombe au-dessous d'une valeur limite de tension pouvant être prédéterminée (U), réalise un déclenchement de l'appareil de coupure à basse tension, et comportant un pont redresseur (4), qui est alimenté par un réseau polyphasé de lignes (1) et comporte un nombre, qui correspond au nombre des phases (L1, L2, L3), de branches (4a, 4b, 4c) du redresseur, qui alimentent en commun le dispositif de déclenchement (5), le dispositif de déclenchement (5) provoquant, dans le cas de la défaillance d'une phase (L1, L2, L3), un déclenchement sur tous les pôles de l'appareil de commutation à basse tension (3), **caractérisé en ce que** le pont redresseur (4) est agencé sous la forme d'un circuit en pont à trois impulsions, et que le dispositif de déclenchement (5) comporte un circuit magnétique équipé d'une armature (9) chargée par un ressort, et une bobine de déclenchement (5a, 5b, 5c), qui possède un nombre, qui correspond au nombre des phases (L1, L2, L3), de parties d'enroulement (5a, 5b, 5c) dont chacune est située dans l'une des branches (4a, 4b, 4c) du redresseur, auquel cas en raison de la défaillance d'au moins une phase (L1, L2, L3), une force de rappel (F_{T}), qui agit sur l'armature (9), dépasse la force de retenue (F_{H}) produite par le circuit magnétique.

2. Disjoncteur à minimum de tension selon la revendication 1, **caractérisé en ce que** dans chaque branche (4a, 4b, 4c) du redresseur sont disposées au moins une diode (D1, D3,D5) et une résistance ohmique (Rₐ, R_{b}, R_{c}) branchée en aval côté cathode de cette diode, des valeurs additionnées de résistance correspondant à la valeur résistive amont du dispositif de déclenchement (5).

3. Disjoncteur à minimum de tension selon la revendication 1, **caractérisé en ce que** dans chaque branche (4a, 4b, 4c) du redresseur est disposée au moins une diode (D1, D3, D5) reliée à une résistance amont (R) du dispositif de déclenchement (5).

4. Déclencheur à minimum de tension selon l'une des revendications 1 à 3, caractérisé en ce les parties (5a, 5b, 5c) de l'enroulement sont disposées dans une culasse (7) portant un corps de bobine (8).

5. Déclencheur à minimum de tension selon la revendication 4, **caractérisé en ce que** le corps de bobine (8) est divisé en un nombre de champs (8a, 8b, 8c) qui correspond au nombre des parties d'enroulement (5a, 5b, 5c).
